# EUROPÄISCHE PATENTSCHRIFT

(11) **EP 2 321 136 B1**
(45) Veröffentlichungstag und Bekanntmachung des Hinweises auf die Patenterteilung: **05.11.2014**
(21) Anmeldenummer: 09781796.9
(22) Anmeldetag: 13.08.2009
(51) Int. Cl.: B60K 6/52, B60K 6/48, B60K 6/54, B60W 20/00, B60W 10/06, B60W 10/08, B60W 10/10, B60W 10/02, B60W 30/18

(54) **HYBRIDANTRIEBSSYSTEM**
HYBRID DRIVE SYSTEM
SYSTÈME D'ENTRAÎNEMENT HYBRIDE

(30) Priorität: 11.09.2008 DE 102008041985
(43) Veröffentlichungstag der Anmeldung: 18.05.2011
(73) Patentinhaber: Robert Bosch GmbH, 70442 Stuttgart (DE)
(72) Erfinder: STEUERNAGEL, Frank, 70469 Stuttgart (DE); KHATCHIKIAN, Peter, 71701 Schwieberdingen (DE); DRESCHMANN, Sascha, 71272 Renningen/Malmsheim (DE); RICHTER, Boyke, 76228 Karlsruhe (DE); HELLMANN, Manfred, 71706 Hardthof (DE); SCHENK, Rene, 71732 Tamm (DE)
(86) Internationale Anmeldenummer: PCT/EP2009/060488
(87) Internationale Veröffentlichungsnummer: WO 2010/028925

(56) Entgegenhaltungen:
- EP-A- 0 941 883
- EP-A- 1 036 957
- EP-A- 1 249 601
- EP-A- 1 577 138
- DE-A1- 19 623 847
- DE-A1- 19 939 813
- DE-A1-102006 045 521
- DE-A1-102006 046 419
- US-A1- 2003 203 782
- US-A1- 2007 204 601
- US-A1- 2008 051 248

## Beschreibung

### Stand der Technik

Die Erfindung betrifft ein Hybridantriebssystem für ein Kraftfahrzeug mit wenigstens einem Verbrennungsmotor und wenigstens einem Elektromotor, welche jeweils zumindest ein Rad des Kraftfahrzeugs antreiben. Die Erfindung betrifft weiterhin ein Kraftzeug mit einem Hybridantriebssystem.

Vor dem Hintergrund steigender Rohölpreise sowie dem sich abzeichnenden Wandel des Erdklimas wird die Forderung nach möglichst verbrauchsarmen und treibstoffeffizienten Kraftfahrzeugen zunehmend größer.

Ein vielversprechender Ansatz hierzu liegt in der Verwendung von Kraftfahrzeugen mit Hybridantriebssystemen. Bei Hybridantriebssystemen wird zusätzlich zum normalen Verbrennungsmotor ein weiterer Motor verwendet, der eine unterschiedliche Energieform nutzt, um das Kraftfahrzeug anzutreiben. In der Praxis haben sich hierzu Elektromotoren durchgesetzt.

Durch die Verwendung zusätzlicher Motoren ist es einerseits möglich, den Verbrennungsmotor weitgehend dauerhaft in einem besonders energieeffizienten Betriebsmodus zu betreiben. Die vom Verbrennungsmotor gelieferte Antriebsenergie, die zu einem bestimmten Zeitpunkt nicht zum Antrieb des Kraftfahrzeugs genutzt wird, kann in einem Energiespeicher, wie beispielsweise einem Akkumulator, zwischengespeichert werden. Zu einem späteren Zeitpunkt kann die so zwischengespeicherte Energie zum Antrieb des Kraftfahrzeugs genutzt werden. Der Verbrennungsmotor kann dadurch entlastet werden, oder sogar ganz ausgeschaltet werden. Gegebenenfalls ist es auch möglich, den Verbrennungsmotor kleiner zu dimensionieren. Darüber hinaus ist es auch möglich bei einer Verzögerung des Kraftfahrzeugs die kinetische Energie des Kraftfahrzeugs in elektrische Energie umzuwandeln und im Akkumulator zwischenzuspeichern. Die Bremsenergie geht dadurch nicht "verloren".

Aufgrund dieser (und weiterer) Effekte sind Kraftfahrzeuge mit Hybridantriebssystemen besonders kraftstoffeffizient, insbesondere wenn das Kraftfahrzeug im Stadtverkehr betrieben wird.

Aufgrund der noch relativ jungen Technologie gibt es noch relativ viele bislang ungelöste Detailprobleme, die eine rasche Verbreitung von Hybridantriebssystemen bislang verhindern.

Ein Problem besteht beispielsweise bei sogenannten Axle-Split-Hybrid-Antrieben (die Antriebsmotoren wirken auf unterschiedliche Antriebsachsen). Bei diesen wird eine Achse des Kraftfahrzeugs von einem konventionellen Verbrennungsmotor angetrieben. Die Elektromotoren des Hybridantriebs wirken dagegen auf eine zweite Achse. Bei derartigen Axle-Split-Hybrid-Antrieben kann die elektrische Maschine nicht den gesamten Fahrzeuggeschwindigkeitsbereich abdecken: Einerseits ist die maximal mögliche Drehzahl des Elektromotors nach oben hin begrenzt, um Beschädigungen des Elektromotors zu vermeiden. Wird der Elektromotor demgegenüber bei niedrigen Drehzahlen betrieben, so führt dies zu ungünstigen Wirkungsgraden des Elektromotors, was naturgemäß unerwünscht ist. Die Auslegung des Arbeitspunkts des Elektromotors stellt daher einen Kompromiss dar, der an beiden Enden des Geschwindigkeitsbereichs des Kraftfahrzeugs Probleme verursacht.

Um durch die Drehzahlobergrenze des Elektromotors weniger eingeschränkt zu sein, wurde in EP 0 224 144 A1 bereits vorgeschlagen, die mechanische Verbindung zwischen Antriebsachse und Elektromotor durch eine Kupplung lösen zu können. Hierdurch kann der Wirkungsgrad des Elektromotors im niedrigen Geschwindigkeitsbereich des Kraftfahrzeugs erhöht werden. Gleichzeitig kann durch Auskuppeln der Kupplung eine Beschädigung des Elektromotors bei hohen Fahrzeuggeschwindigkeiten vermieden werden.

Aus der Offenlegungsschrift DE 10 2006 046 419 A1 ist außerdem ein Hybridantriebssystem mit einem Verbrennungsmotor bekannt, der über ein Schaltgetriebe einer ersten Achse zugeordnet ist, sowie mit einer Elektromaschine, die einer zweiten Achse zugeordnet und über ein Schaltgetriebe mit dieser verbunden ist. Ein ähnliches Hydbridantriebssystem ist aus der US 2008/0051248 A1 bekannt, wobei hier auf ein Schaltgetriebe zwischen Elektromotor und der dem Elektromotor zugeordneten Achse verzichtet wird.

Die bislang bekannten Hybridantriebssysteme weisen jedoch nach wie vor Nachteile auf.

### Offenbarung der Erfindung

### Vorteile der Erfindung

Daher wird gemäß Anspruch 1 vorgeschlagen, bei einem Hybridantriebssystem für ein Kraftfahrzeug, welches wenigstens einen Verbrennungsmotor und wenigstens einen Elektromotor aufweist, welche jeweils zumindest ein Rad des Kraftfahrzeugs antreiben, wobei der wenigstens eine Verbrennungsmotor über ein erstes Mehrganggetriebe mit dem zumindest einen korrespondierenden Rad gekoppelt ist, derart weiterzubilden, dass der zumindest eine Elektromotor über ein zweites Mehrganggetriebe mit dem zumindest einen korrespondierenden Rad gekoppelt ist. Bei stehendem Verbrennungsmotor wird vor einem Schaltvorgang eines zweiten Mehrganggetriebes der Verbrennungsmotor gestartet und/oder bei laufendem Verbrennungsmotor ein Ausschalten des Verbrennungsmotor bis zur Durchführung eines Schaltvorgangs eines zweiten Mehrganggetriebes verzögert. Dadurch ist es auf besonders elegante Weise möglich, unerwünschte Schaltrucke, die durch ein Schalten des zweiten Mehrganggetriebes verursacht werden könnten, zu verringern bzw. zu vermeiden. Durch ein derartiges zweites Mehrganggetriebe ist es möglich, zumindest einen Elektromotor über den gesamten Geschwindigkeitsbereich des Kraftzeugs hinweg im Wesentlichen immer in einem günstigen Arbeitspunkt (also bei höheren Drehzahlen) zu betreiben. Dadurch ist es möglich, dass der zusätzliche Elektromotor im gesamten Geschwindigkeitsbereich des Kraftfahrzeugs auf besonders effektive Weise eine hohe zusätzliche Antriebsleistung bereitstellen kann. Anderseits ist es auch möglich, in einem Rekuperationsbetrieb möglichst viel kinetische Energie in elektrische Energie umzuwandeln und zwischenzuspeichern. Der eingesetzte Kraftstoff kann dadurch besonders effektiv genutzt werden. Es ist im Übrigen auch möglich, dass die vom Verbrennungsmotor angetriebene Achse bereits von einem Hybridantrieb (Parallelhybrid oder Leistungsverzweiger) angetrieben wird. Bei den Mehrganggetrieben kann es sich um beliebige Getriebe handeln, bei denen das Übersetzungsverhältnis geändert werden kann. Insbesondere kann es sich um gestufte Schaltgetriebe, stufenlose Getriebe, automatische Getriebe, manuelle Schaltgetriebe und/oder automatisierte Schaltgetriebe mit manueller Gangvorwahl handeln. Die Mehrganggetriebe (erstes Mehrganggetriebe/zweites Mehrganggetriebe usw.) können selbstverständlich unterschiedlich ausgebildet sein. Die Kopplung kann zu einem Einzelrad hin, oder aber auch zu einer Antriebsachse hin erfolgen. Möglich ist es im Übrigen auch, beispielsweise Differenziale oder dergleichen vorzusehen.

Erfindungsgemäß ist vorgesehen, dass der wenigstens eine Verbrennungsmotor und der wenigstens eine Elektromotor mit unterschiedlichen Rädern, vorzugsweise mit Rädern unterschiedlicher Achsen gekoppelt ist. Dadurch kann auf besonders einfache Weise eine Art Allradantrieb realisiert werden. Darüber hinaus weist eine derartige Ausbildung auch Vorteile hinsichtlich der Ansteuerung der unterschiedlichen Motoren auf.

Erfindungsgemäß ist vorgesehen, dass die Mehrganggetriebe als Mehrstufenschaltgetriebe ausgebildet sind. Derartige Schaltgetriebe wurden über die Jahrzehnte hinweg optimiert und sind daher problemlos in vorteilhaften Bauformen verfügbar. Auch sind die in dem Getriebe entstehenden Verluste relativ klein. Bei den Mehrstufenschaltgetriebe kann es sich in beliebiger Weise um Automatikgetriebe, manuelle Schaltgetriebe oder automatisierte Schaltgetriebe mit manueller Gangvonrvahl handeln.

Möglich ist es, eine Steuerschaltung vorzugehen, welche die Schaltstellung zumindest eines der Mehrganggetriebe und/oder die Ansteuerung des wenigstens einen Verbrennungsmotors und/oder die Ansteuerung des wenigstens einen Elektromotors beeinflusst. Selbstverständlich kann die Beeinflussung durchaus so weit gehen, dass die Steuerung des, beziehungsweise der entsprechenden Komponenten im Wesentlichen vollständig durch die Steuerschaltung erfolgt. Mit Hilfe einer derartigen Steuerschaltung können auf besonders einfache Weise unterschiedliche Regelungsaufgaben übernommen werden. So kann beispielsweise das Hybridantriebssystem auf besonders effizientes und energiesparendes Fahren, auf möglichst komfortables Fahren oder auf eine "Mittelstellung" hin optimiert werden. Insbesondere dann, wenn es sich um ein Kraftfahrzeug mit handbetätigter Schaltung (vollständig manuelles Schaltgetriebe und/oder automatisiertes Schaltgetriebe mit manueller Gangvorwahl) handelt, ist es bevorzugt, wenn die Steuerschaltung insbesondere die Ansteuerung des Elektromotors und/oder die Ansteuerung des zweiten Mehrganggetriebes (welches zum Elektromotor korrespondiert) beeinflusst oder sogar im Wesentlichen bewirkt. Dadurch kann für den Kraftfahrzeugführer ein weitgehend authentisches Fahrverhalten des Kraftfahrzeugs vermittelt werden.

Möglich ist es darüber hinaus, Messsensoren vorzusehen, welche insbesondere die Schaltstellung zumindest eines der Mehrganggetriebe und/oder den Betriebszustand des wenigstens einen Verbrennungsmotors und/oder den Betriebszustand des wenigstens einen Elektromotors und/oder den Betriebszustand des Kraftfahrzeugs und/oder die Stellung von Bedienelementen des Kraftfahrzeugs misst. Bei Kenntnis entsprechender Parameter ist es nämlich möglich, die Ansteuerung der sonstigen Komponenten, beziehungsweise von Teilen davon, auf besonders effektive Weise erfolgen zu lassen. Unter einer Schaltstellung zumindest eines der Mehrganggetriebe ist insbesondere der jeweils gewählte Gang und/oder die Stellung "eingekuppelt" beziehungsweise "ausgekuppelt" zu verstehen. Unter einem Betriebszustand eines Motors (Verbrennungsmotor/Elektromotor) ist insbesondere an den Leistungsbedarf, die Leistungsfreisetzung, die Drehzahl und die Temperatur des entsprechenden Motors zu denken. Bei dem Betriebszustand des Kraftfahrzeugs ist insbesondere an die Kraftfahrzeuggeschwindigkeit, Lenkradstellungen, Fahrbahnbeschaffenheit, Kühlwassertemperatur, Außentemperatur, sowie Bergauffahrten, beziehungsweise Bergabfahrten zu denken. Bei der Stellung von Bedienelementen des Kraftfahrzeugs ist nicht nur an die Stellung des Fahrpedals, des Bremspedals sowie des Kupplungspedals zu denken. Vielmehr kann auch eine manuelle Gangvorgabe beziehungsweise eine vom Fahrer bestimmte Schaltstrategie vorgewählt werden. Beispielsweise kann es dem Fahrer ermöglicht werden, zwischen einer möglichst sportlichen Schaltstrategie, einer möglichst verbrauchsarmen Schaltstrategie, sowie einer möglichst komfortablen Schaltstrategie zu wählen.

Es kann sich als sinnvoll erweisen, in der Steuerschaltung zumindest eine Kennlinie, vorzugsweise zumindest ein Kennlinienfeld mit mehreren Kennlinien zu speichern. Mit Hilfe von Kennlinien beziehungsweise Kennlinienfeldern ist es möglich, Bedingungen zu definieren, bei denen beispielsweise bei einem zweiten Mehrganggetriebe (einem Elektromotor zugehörig) ein Schaltvorgang erfolgen soll. Beispielsweise ist es möglich, in Abhängigkeit von einer Raddrehzahl und vom Drehmoment des Elektromotors (oder aber auch in Abhängigkeit vom Drehmomentwunsch des Kraftfahrzeugführers) eine Schaltbedingung zu definieren. Dabei ist es möglich, die Schaltbedingung zum Hochschalten des Mehrganggetriebes unterschiedlich von der Schaltbedingung zum Herunterschalten des Mehrganggetriebes zu wählen. Möglich ist es auch, mehrere Kennlinienfelder zu speichern. Dabei kann jedes Kennlinienfeld für eine bestimmte Schaltstrategie stehen. Beispielsweise kann ein erstes Kennlinienfeld den Kraftstoffverbrauch minimieren, ein zweites Kennlinienfeld den Fahrkomfort optimieren und ein drittes Kennlinienfeld ein sportliches Fahrverhalten schaffen. Auf diese Weise kann das Hybridantriebssystem besonders einfach auf individuelle Fahrerwünsche angepasst werden.

Vorteilhaft kann es sein, wenn beim Hybridantriebssystem beim Erreichen von Grenzbeanspruchungsbedingungen ein Gangwechsel eines Mehrganggetriebes, insbesondere eines zweiten Mehrganggetriebes erfolgt, um Überbelastungen von Teilen des Hybridantriebssystems zu vermeiden. Werden also zum Beispiel mechanische und/oder elektrische Belastungsgrenzen des Elektromotors erreicht, wird in jedem Fall ein Gangwechsel initiiert. In diesem Fall geht die Betriebssicherheit des Hybridantriebssystems vor Fahrkomfort und/oder Wirtschaftlichkeit. Die Belastungsgrenze muss dabei nicht notwendigerweise eine Zerstörungsgrenze einer Einrichtung darstellen, sondern es kann sich auch um eine Grenze handeln, bei der beispielsweise der Verschleiß stark ansteigt. Ein Beispiel hierfür ist, dass ein Hochschalten des zweiten Mehrganggetriebes veranlasst wird, wenn sich die Drehzahl des Elektromotors einem kritischen Wert nähert.

Es kann sich als sinnvoll erweisen, wenn ein Gangwechsel eines zweiten Mehrganggetriebes (einen Elektromotor zugehörig) bevorzugt bei einem Gangwechsel eines ersten Mehrganggetriebes (einem Verbrennungsmotor zugehörig) erfolgt. Diese Strategie kann besonders sinnvoll sein, wenn es sich bei dem ersten Mehrganggetriebe um ein manuell betätigtes Schaltgetriebe handelt. Hier erfolgt die Zugkraftunterbrechung der Elektromotorenzugkraft zu einem Zeitpunkt, zu dem der Fahrer ohnehin eine Zugkraftunterbrechung erwartet. Dadurch kommt es für den Kraftfahrzeugführer zu keiner subjektiven Komforteinbuße. Ganz im Gegenteil kann auf diese Weise ein authentisches Fahrgefühl dargestellt werde.

Möglich ist es auch, dass bei einem Gangwechsel eines zweiten Mehrganggetriebes (einem Elektromotor zugehörig) der Zugkraftverlust zumindest teilweise, bevorzugt im Wesentlichen von wenigstens einem anderen Motor, insbesondere wenigstens einem Verbrennungsmotor ausgeglichen wird. Dies kann beispielsweise dadurch realisiert werden, dass eine Steuerschaltung die vom Verbrennungsmotor geforderte Leistung korrespondierend zum Zugkraftverlust des Elektromotors hoch reguliert. Dadurch kann der Komfortverlust durch den "Schaltruck" des zweiten Mehrganggetriebes gemindert werden, beziehungsweise im Wesentlichen unterdrückt werden. Auf diese Weise kann das Hybridantriebssystem besonders hohen Komfortansprüchen gerecht werden. Insbesondere ist es möglich, dass der Verbrennungsmotor während des Schaltvorgangs des zweiten Mehrganggetriebes den Zugkraftverlust durch "Wegfallen" des Elektromotors zumindest zum Teil ausgleichen kann. Aber selbst wenn der Verbrennungsmotor während eines solchen "Schaltrucks" nicht (vollständig) nachreguliert wird, so verbleibt dennoch eine gewisse Zugkraft (nämlich die - ggf. erhöhte - Verbrennungsmotorenzugkraft), so dass der Schaltruck für die Fahrzeuginsassen (subjektiv geringer) ausfallen kann.

Sinnvoll ist es darüber hinaus, wenn ein Gangwechsel eines zweiten Mehrganggetriebes in einem Drehmomentbereich des Elektromotors erfolgt, in dem der Zugkraftverlust weitgehend, bevorzugt im Wesentlichen vollständig von wenigstens einem anderen Motor, insbesondere von wenigstens einem der Verbrennungsmotoren ausgeglichen werden kann. Unter dem Begriff "weitgehend" ist dabei an einen Zugkraftausgleich von beispielsweise 85%, 90%, 95%, 98%, 99% oder 100% zu denken. "Droht" durch die Betriebsbedingungen, dass ein derartiger Drehmomentbereich verlassen wird, so wird beispielsweise vorab ein Schaltvorgang des zweiten Mehrganggetriebes initiiert. Dadurch kann eine möglichst weitgehende Zugkraftkompensation für einen Großteil von Betriebszuständen des Hybridantriebssystems realisiert werden.

Möglich ist es weiterhin, dass bei wenigstens einem laufenden Verbrennungsmotor ein Gangwechsel eines zweiten Mehrganggetriebes bei möglichst niedrigen Drehmomenten des Elektromotors erfolgt, wobei als Untergrenze bevorzugt der Wirkungsgrad des Elektromotors und/oder die Leis tungshyperbel zumindest eines Elektromotors dient. Kleine Drehmomente des Elektromotors haben üblicherweise den Vorteil, dass der spürbare Schaltruck besonders gering ist, bzw. vom Verbrennungsmotor nur besonders kleine Zugkraftunterbrechungen kompensiert werden müssen. Eine Untergrenze für einen Hochschaltvorgang ist sinnvollerweise durch die Wirkungsgradkurve des Elektromotors gegeben. Fällt der Wirkungsgrad des Elektromotors ab, so überwiegt ab einem gewissen Punkt der Wirtschaftlichkeitsäspekt vor dem Komfortaspekt. Eine andere Untergrenze kann sich durch die Leistungshyperbel des Elektromotors ergeben. Oberhalb der Leistungshyperbel ist das Produkt aus Drehzahl und Drehmoment konstant. Bei kleinerer Drehzahl ist dagegen das maximale Drehmoment von der Drehzahl unabhängig und konstant. Der Schaltvorgang kann dabei sinnvollerweise so gelegt werden, dass sich nach dem Hochschaltvorgang noch ein maximales Drehmoment des Elektromotors ergeben kann. Es ist auch möglich, dass die Untergrenze von anderen Parametern, wie beispielsweise der Drehzahl des Elektromotors, dem geforderten Drehmoment des Elektromotors und/oder davon, ob das Mehrstufengetriebe des Verbrennungsmotors geschaltet wird, abhängig ist. So kann beispielsweise bei eingekuppeltem Verbrennungsmotor die Schaltgrenze über den Wirkungsgrad definiert werden, wohingegen bei einem Gangwechsel des Verbrennungsmotor der Schaltvorgang des zweiten Mehrganggetriebes durch die Leistungshyperbel definiert wird, was in der Regel einen Schaltvorgang bei niedrigeren Drehzahlen und/oder Drehmomenten bewirkt. Es ist im Übrigen auch möglich, die Gewichtungen (oder einen Teil davon) in Abhängigkeit von einem Fahrerwunsch vorzunehmen.

Eine weitere bevorzugte Ausbildung des Hybridantriebssystem kann sich ergeben, wenn bei wenigstens einem stehenden Verbrennungsmotor ein Gangwechsel eines zweiten Mehrganggetriebes bei möglichst niedrigen Drehmomenten des Elektromotors erfolgt. Hier ist der spürbare Schaltruck um so kleiner, je kleiner das Drehmoment des Elektromotors ist. Die Kurve kann auch so gewählt werden, dass bei höheren Drehmomenten zunächst gar nicht geschaltet wird, und beispielsweise zunächst abgewartet wird, bis zumindest ein Verbrennungsmotor gestartet wurde. Eine untere Grenze kann hier jedoch auch beispielsweise durch die Leistungshyperbel oder die Wirkungsgradkurve des Elektromotors vorgegeben werden, wobei hier ggf. noch ein Korrekturfaktor (insbesondere im Verhältnis zur Schaltbedingung bei laufendem Verbrennungsmotor) verwendet werden kann.

Weiterhin ist es möglich, dass ein Herunterschalten eines zweiten Mehrganggetriebes (einem Elektromotor zugehörig) bei einer Verzögerung des Kraftfahrzeugs und/oder bei einem Rekuperationsbetrieb verzögert und/oder vermieden wird, insbesondere in einem hohen Drehmomentbereich des Elektromotors, speziell bei wenigstens einem stehenden Verbrennungsmotor. Gerade bei einem Leerlaufbetrieb des Verbrennungsmotors beziehungsweise bei stehendem Verbrennungsmotor ist es nur schwer möglich oder praktisch unmöglich die Unterbrechung der Verzögerungsleistung des Elektromotors aufgrund des "Schaltrucks" mit Hilfe des Verbrennungsmotors auszugleichen. Wird hier ein Herunterschalten des zweiten Mehrganggetriebes verzögert beziehungsweise sogar ganz vermieden, so wird zwar weniger Bremsenergie in elektrische Energie zurückgewonnen, jedoch kann der Fahrkomfort beträchtlich erhöht werden. Der Gewinn an Fahrkomfort kann den vergleichsweise geringen Nachteil eines relativ geringen Energieverlusts mehr als aufwiegen. Naturgemäß fällt der (nicht ausgeglichene) Schaltruck des zweiten Mehrganggetriebes umso größer aus, je größer das Drehmoment des Elektromotors ist.

Weiterhin wird vorgeschlagen, ein Kraftfahrzeug mit einem Hybridantriebssystem zu versehen, welches die oben beschriebenen Eigenschaften aufweist. Das Kraftfahrzeug weist dann die bereits beschriebenen Eigenschaften und Vorteile in analoger Weise auf.

Weiterhin wird ein Verfahren beansprucht, bei dem das oben beschriebene Hybridantriebssystem eines Kraftfahrzeugs auf oben beschriebene Weise geschaltet wird.

### Kurze Beschreibung der Zeichnungen

Im Folgenden wird die Erfindung an Hand möglicher Ausführungsformen und unter Bezugnahme auf die beiliegenden Figuren näher erläutert. Es zeigen:
- Fig. 1:: Ein Ausführungsbeispiel für ein Hybridantriebssystem in schematischer Draufsicht;
- Fig. 2:: ein Ausführungsbeispiel für ein Kennlinienfeld.

### Ausführungsformen der Erfindung

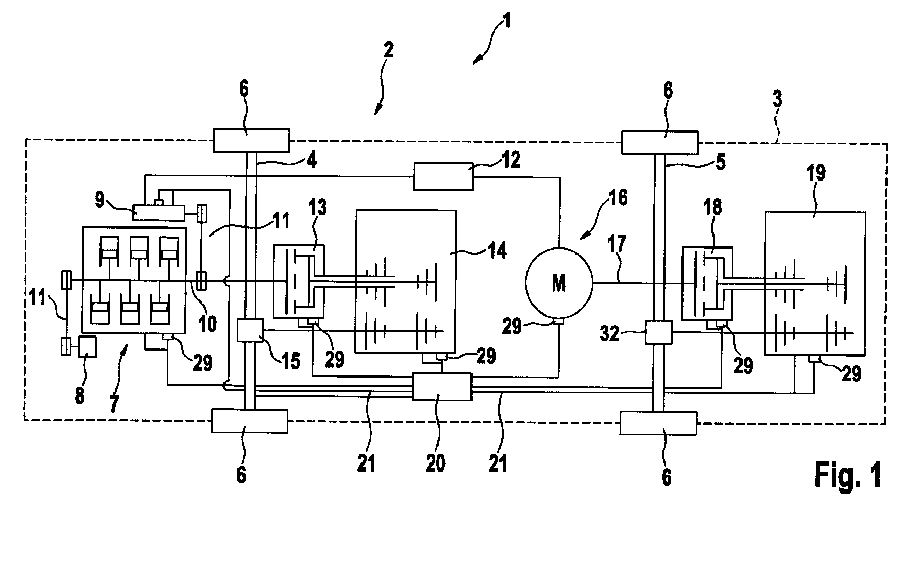

In Fig. 1 ist ein Kraftfahrzeug 1 mit einem Hybridantriebssystem 2 in schematischer Draufsicht von oben zu sehen. Die Karosserie 3 des Kraftfahrzeugs 1 ist aus Übersichtsgründen nur schematisch dargestellt. Das Hybridantriebssystem 2 des Kraftfahrzeugs 1 verfügt über zwei Achsen 4, 5, an denen jeweils Räder 6 montiert sind.

Die Vorderachse 4 wird von einem Verbrennungsmotor 7 angetrieben. Der Verbrennungsmotor 7 verfügt über die üblichen Nebenaggregate, die in Fig. 1 aus zeichnerischen Gründen nur teilweise dargestellt sind. In Fig. 1 sind der Anlasser 8 und ein Generator 9 dargestellt. Anlasser 8 und Generator 9 sind mit der Antriebswelle 10 des Verbrennungsmotors 7 beispielsweise über Keilriemen 11 verbunden. In Betriebszuständen des Kraftfahrzeugs 1, bei denen die vom Verbrennungsmotor 7 erzeugte Leistung nicht vollständig zum Antrieb des Kraftfahrzeugs 1 benötigt wird, wird mit Hilfe des Generators 9 elektrische Energie erzeugt, die in einem Akkumulator 12 zwischengespeichert werden kann.

Die vom Verbrennungsmotor 7 erzeugte Zugkraft wird über die Antriebswelle 10, eine Kupplung 13, ein mechanischens Schaltgetriebe 14, und ein Differenzial 15 den an der Vorderachse 4 befestigten Rädern 6 zugeführt. Kupplung 13 und Schaltgetriebe 14 sind vorliegend als mechanische, manuell bediente Baugruppen ausgeführt.

Steigt mit zunehmender Geschwindigkeit des Kraftfahrzeugs 1 die Drehzahl des Verbrennungsmotors 7 an, so wird der Kraftfahrzeugführer zu einem gewissen Zeitpunkt die Kupplung 13 ausrücken und das Schaltgetriebe 14 in den nächsthöheren Gang schalten. Anschließend rückt er die Kupplung 13 durch Lösen des Kupplungspedals wieder ein. Bei einem Abbremsen des Kraftfahrzeugs 1 wird der Kraftfahrzeugführer den Gang des Schaltgetriebes 14 dementsprechend herunter schalten.

Zusätzlich zum Verbrennungsmotor 7 verfügt der Hybridantrieb 2 des Kraftfahrzeugs 1 über einen Elektromotor 16. Der Elektromotor 16 treibt über eine Antriebswelle 17, eine zweite Kupplung 18, ein zweites Schaltgetriebe 19 und ein zweites Differenzial 32 die Räder 6 der Hinterachse 5 an. Die zweite Kupplung 18 und das zweite Schaltgetriebe 19 werden jeweils automatisch von einer elektronischen Steuerschaltung 20 betätigt. Auch der Elektromotor 16 wird von der elektronischen Steuerschaltung 20 angesteuert. Der Elektromotor 16 bezieht in einem Antriebsmodus die elektrische Energie vom Akkumulator 12. In einem Rekuperationsmodus arbeitet der Elektromotor 16 als Generator und die von ihm erzeugte elektrische Energie wird im Akkumulator 12 zwischengespeichert. Im Übrigen ist es auch möglich, dass die Steuerschaltung 20 neben dem Elektromotor 16, der zweiten Kupplung 18 und dem zweiten Schaltgetriebe 19 beispielsweise auch die Antriebsleistung des Verbrennungsmotors 7 beeinflussen kann.

Die elektronische Steuerschaltung 20 ist über Signalleitungen 21 mit mehreren Messsensoren 29 verbunden, die beispielsweise im ersten Schaltgetriebe 14, in der ersten Kupplung 13, im Verbrennungsmotor 7 und/oder im Generator 9 angeordnet sind. Weitere Messsensoren 29 können beispielsweise auch im Elektromotor 16 selbst vorgesehen sein, wo sie beispielsweise die Drehzahl des Elektromotors 16 messen können. Darüber hinaus ist ein Messsensor 29 vorgesehen, der die Drehzahl der Räder 6 messen kann und das Messsignal über eine Steuerleitung 21 der Steuerschaltung 20 zuführen kann.

Dadurch dass die vom Elektromotor 16 freigesetzte Antriebsenergie (beziehungsweise in einem Rekuperationsmodus des Kraftfahrzeugs 1 die mechanische Verzögerungsleistung) über eine zweite Kupplung 18 und eine zweites Schaltgetriebe 19 den an der Hinterachse 5 befestigten Rädern 6 zugeführt wird, kann der Arbeitspunkt des Elektromotors 16 in Abhängigkeit von der Drehgeschwindigkeit der Räder 6 und damit in Abhängigkeit von der Fahrzeuggeschwindigkeit angepasst werden. Bei einer niedrigen Geschwindigkeit des Kraftfahrzeugs 1 wählt die elektronische Steuerung 20 beispielsweise für das zweite Schaltgetriebe 19 einen niedrigen Gang. Dadurch weist der Elektromotor 16 eine erhöhte Drehzahl auf, was in einem hohen Wirkungsgrad des Elektromotors 16 resultiert. Bei einer hohen Geschwindigkeit des Kraftfahrzeugs 1 wählt die elektronische Steuerung 20 dagegen einen hohen Gang für das zweite Schaltgetriebe 19. Dadurch wird ein Überdrehen des Elektromotors 16 vermieden, welches den Elektromotor 16 beschädigen könnte.

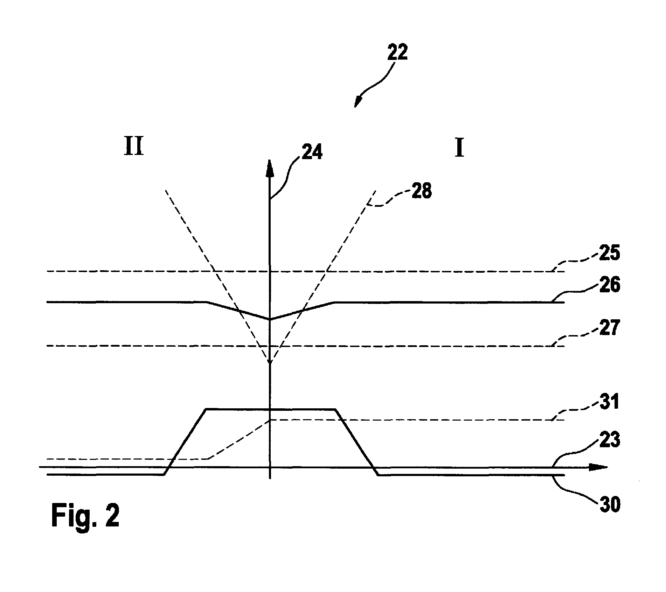

In Fig. 2 ist ein für den Betrieb des in Fig. 1 dargestellten, mit einem Hybridantriebssystem 2 versehenen Kraftfahrzeugs 1 geeignetes Schaltschema 22 dargestellt. Auf der Abszisse 23 ist das Drehmoment des Elektromotors 16 dargestellt. Das Drehmoment des Elektromotors 16 kann positiv sein (rechte Seite I des Schaltschemas 22). Dies entspricht einem Antriebsmodus des Kraftfahrzeugs 1, bei dem der Elektromotor 16 das Kraftfahrzeug 1 antreibt. Der Elektromotor 16 kann jedoch auch mit einem negativem Drehmoment betrieben werden (linke Seite II des Schaltschemas 22). Dies entspricht einem Rekuperationsbetrieb, bei dem das Kraftfahrzeug 1 verzögert wird.

Auf der Ordinate 24 des Schaltschemas 22 ist die Drehzahl der Räder 6 dargestellt. Diese korrespondiert unter üblichen Betriebsbedingungen mit der Geschwindigkeit des Kraftfahrzeugs 1.

Eine erste Schaltbedingung ergibt sich durch die Höchstdrehzahlkurve 25. Wird diese Drehzahl erreicht, wird unabhängig von den sonstigen Betriebsbedingungen immer sofort eine Hochschaltung des zweiten Schaltgetriebes 19 ausgelöst. Dadurch wird verhindert dass es zu einer Beschädigung des Elektromotors 16 kommen kann. Im Falle der Höchstdrehzahlkurve 25 dominiert die Betriebssicherheit des Hybridantriebs 2 den Komfortaspekt und den Wirtschaftlichkeitsaspekt. In der Regel ist diese Kurve 25 nur als Sicherheitsmaßnahme vorgesehen, da in der Regel eine Hochschaltung des zweiten Schaltgetiebes 19 schon vorher, durch eine andere Schaltkurve erfolgt.

Eine zweite Schaltbedingung liegt in Form der Hochschaltkurve bei aktivem Verbrennungsmotor 26 vor. Sofern der Verbrennungsmotor 7 läuft und der Arbeitspunkt des Elektromotors 16 oberhalb der Hochschaltkurve bei laufendem Verbrennungsmotor 26 liegt, so wird das zweite Schaltgetriebe 19 um einen Gang nach oben geschaltet. Unter Komforterwägungen (möglichst niedriger Schaltruck, bzw. möglichst geringer Schaltruckausgleich durch den Verbrennungsmotor 7) sollte die Kurve bei möglichst niedrigen Drehmomenten liegen. Daher liegt die Hochschaltkurve bei aktivem Verbrennungsmotor 26 bei niedrigen Elektromotor-Drehmomenten niedriger als bei höheren Elektromotor-Drehmomenten. Bei höheren Elektromotor-Drehmomenten wird dagegen aufgrund der dann erforderlichen hohen Lastumverteilung zwischen Elektromotor 16 und Verbrennungsmotor 7 das Hochschalten verzögert durchgeführt, um auf einen Verbrennungmotorschaltwechsel (siehe folgender Absatz) zu "hoffen". Dennoch kann der Gangwechsel des zweiten Schaltgetriebes 19 auch in diesem Bereich unauffällig durchgeführt werden. In jedem Fall erfolgt der Gangwechsel mit einem Abstand zur Höchstdrehzahlkurve 25. Die Schaltbedingungskurve 26 berücksichtigt selbstverständlich auch den Wirkungsgrad des Elektromotors 16 im jeweiligen Drehmoment- bzw. Drehzahlbereich.

Eine weitere Kurve liegt in Form der Hochschaltkurve bei laufendem Verbrennungsmotor und Verbrennungsmotorschaltwechsel 27 vor. Diese Kurve 27 wird nur dann gewählt, wenn einerseits der Verbrennungsmotor 7 in Betrieb ist, anderseits die erste Kupplung 13 (dem Verbrennungsmotor 7 zugehörig) ausgerückt wird. Liegt der Arbeitspunkt des Elektromotors 16 oberhalb der Hochschaltkurve bei laufendem Verbrennungsmotor und Verbrennungsmotorschaltwechsel 27 so wird auch das zweite Schaltgetriebe 19 des Elektromotors 16 einen Gang hoch geschaltet. Im vorliegenden Schaltungsmodell 22 liegt die Hochschaltkurve bei aktivem Verbrennungsmotor und Verbrennungsmotorschaltwechsel 27 niedriger als die Hochschaltkurve bei aktivem Verbrennungsmotor 26 (ohne Verbrennungsmotorschaltwechsel). Die Hochschaltkurve bei aktivem Verbrennungsmotor 26 wird nach unten im Wesentlichen dadruch begrenzt, wenn durch einen höheren Gang das maximal mögliche Drehmoment des Elektromotors 16 (zu stark) begrenzt würde. Dies ist abhängig von der Lage der Leistungshyperbel des Elektromotors 16. In einem zu hohen Gang würde die Leistungshyperbel des Elektromotors 16 verlassen werden, also der Bereich, in dem das Produkt aus Drehzahl und Drehmoment konstant sind. Bei zu niedrigen Drehzahlen ist das maximale Drehmoment des Elektromotors 16 dagegen Drehzahlunabhängig.

Die Hochschaltkurve bei laufendem Verbrennungsmotor und Verbrennungsmotorschaltwechsel 27 liegt im Wesentlichen niedriger als die Hochschaltkurve bei laufendem Verbrennungsmotor 26. Im Falle einer ausgerückten ersten Kupplung 13 erfolgt somit der Gangwechsel des zweiten Schaltgetriebes 19 früher als unter Wirtschaftlichkeitsaspekten zwingend. Dieser frühzeitige Gangwechsel ist jedoch sinnvoll, da der Kraftfahrzeugführer bei einem Ausrücken der ersten Kupplung 13 ohnehin eine Unterbrechung der Zugkraft erwartet. Dieses frühzeitige Hochschalten führt somit zu einem subjektiven Komfortgewinn.

Bei deaktiviertem Verbrennungsmotor 7 ist die Hochschaltkurve für ausgeschalteten Verbrennungsmotor 28 einschlägig. Liegt der Arbeitspunkt des Elektromotors 16 oberhalb der Hochschaltkurve bei ausgeschaltetem Verbrennungsmotor 28 und ist der Verbrennungsmotor 7 abgeschaltet, so wird das zweite Schaltgetriebe 19 um einen Gang nach oben geschaltet. Dadurch wird bei kleinen Drehmomenten des Elektromotors 16 schon früh geschaltet, bei hohen Drehmomenten jedoch erst deutlich später. Mann kann diese Schaltbedingung zusätzlich auch mit einer gewissen Zeitverzögerung kombinieren, um damit den Verbrennungsmotor 7 Zeit zu geben, zunächst zu starten, bevor das zweite Schaltgetriebe 19 geschaltet wird, und damit eine der beiden Hochschaltkurven bei eingeschaltetem Verbrennungsmotor 26, 27 einschlägig wirkt. Denn normalerweise sollte ein Hochschalten des zweiten Schaltgetriebes 19 bei ausgeschaltetem Verbrennungsmotor 7 nur bei kleinem Drehmoment des Elektromotors 16 ausgelöst werden. Bei großem Drehmoment des Elektromotors 16 ist es sinnvoller, dass der Verbrennungsmotor 7 zunächst in den aktiven Zustand wechselt und der Schaltvorgang dann über die Hochschaltkurve bei laufendem Verbrennungsmotor 26 ausgelöst wird. Die Form der Hochschaltkurve für ausgeschalteten Verbrennungsmotor 28 kann in der Praxis auch so gewählt werden, dass in einem niedrigen Drehmomentbereich schon früh geschaltet wird, bei etwas größeren Drehmomenten jedoch erst sehr spät oder überhaupt nicht (Kurve in Form eines sehr engen "V").

Bei einem Abbremsen des Kraftfahrzeugs 1 kann prinzipiell auch mit einem höheren Gang des zweiten Schaltgetriebes 19 (beispielsweise mit dem zweiten Gang) bis zum Stillstand des Kraftfahrzeugs 1 gefahren werden. Allerdings ist dann der Wirkungsgrad des Hybridantriebs 2 (und ein gegebenenfalls erforderliches Wiederbeschleunigen des Kraftfahrzeugs 1) eingeschränkt.

Aus diesem Grund ist es sinnvoller, auch bei einer Verzögerung des Kraftfahrzeugs 1 ein Herunterschalten des zweiten Schaltgetriebes 19 auszulösen. Zur Erhöhung des Komfortgewinns kann dabei zwischen einer Herunterschaltkurve bei laufendem Verbrennungsmotor 31 und eine Herunterschaltkurve bei ausgeschaltetem Verbrennungsmotor 30 unterschieden werden.

Bei laufendem Verbrennungsmotor wird ein Herunterschalten des zweiten Schaltgetriebes 19 ausgelöst, wenn der Arbeitspunkt des Elektromotors 16 unterhalb der Herunterschaltkurve bei eingeschaltetem Verbrennungsmotor 31 liegt. Bei positivem Drehmoment des Elektromotors 16 kann der Verbrennungsmotor 7 dieses Drehmoment während des Schaltvorgangs zweiten Schaltgetriebes 19 übernehmen. Bei negativem Drehmoment des Elektromotors 16 (Rekuperationsbetrieb) kann dieses Drehmoment dagegen nicht vom Verbrennungsmotor 7 kompensiert werden, und es wird daher mit dem Herunterschalten bis zur Geschwindigkeit 0 gewartet. Aus diesem Grund ist die Herunterschaltkurve bei eingeschaltetem Verbrennungsmotor 31 auch asymmetrisch zur Ordinate 24. Für die Schaltbedingung der Herunterschaltkurve bei laufendem Verbrennungsmotor 31 kann als zusätzliches Kriterium auch der Fahrerwunsch berücksichtig werden. So kann der Fahrer beispielsweise durch Betätigung eines entsprechenden Knopfes das Herunterschalten für Drehmomente M des Elektromotors 16 mit M≤0 unterdrücken. Dann wird das Herunterschalten des zweiten Schaltgetriebes 19 nur dann unterdrückt, wenn der Verbrennungsmotor 7 das gewünschte Drehmoment tatsächlich nicht aufbringen kann.

Bei ausgeschaltetem Verbrennungsmotor ist die Herunterschaltkurve bei ausgeschaltetem Verbrennungsmotor 30 einschlägig. Liegt der Betriebspunkt des Elektromotors 16 unter der Herunterschaltkurve bei ausgeschaltetem Verbrennungsmotor 30, so wird bei einem Rekuperationsbetrieb erst bei einem Stillstand des Kraftfahrzeugs heruntergeschaltet. Bei einem Stillstand des Kraftfahrzeugs kann jedoch problemlos geschaltet werden. Hat der Verbrennungsmotor 7 ein Ausschaltsignal erhalten, so kann auch durch die Steuerung 20 vorgesehen werden, dass zunächst ein (ggf. vorgezogenes) Herunterschalten des zweiten Schaltgetriebes 19 erfolgt, und erst dann der Verbrennungsmotor 7 ausgeschaltet wird. Der Ausschalten des Verbrennungsmotors 7 wird also verzögert.

Sowohl bei der Herunterschaltkurve bei eingeschaltetem Verbrennungsmotor 31, als auch bei der Herunterschaltkurve bei ausgeschaltetem Verbrennungsmotor 30 kann das fehlende Bremsmoment durch den Elektromotor 16 infolge eines "falschen" Gangs problemlos durch übliche Fahrzeugbremsen aufgebracht werden.

In Fig. 2 wurde aus Übersichtlickeitsgründen lediglich ein Schaltschema 22 für ein zweites Schaltgetriebe 19 dargestellt, das nur zwei Gängen aufweist. Eine Erweiterung auf ein zweites Schaltgetriebe 19 mit drei oder sogar mehr Gängen ist jedoch ohne weiteres möglich.

## Patentansprüche

1. Hybridantriebssystem (2) für ein Kraftfahrzeug (1), aufweisend wenigstens einen Verbrennungsmotor (7) und wenigstens einen Elektromotor (16), welche jeweils zumindest ein Rad (6) des Kraftfahrzeugs (1) antreiben, wobei der wenigstens eine Verbrennungsmotor (7) über ein erstes Mehrganggetriebe (14) mit dem zumindest einen korrespondierenden Rad (6) einer Achse (4) gekoppelt ist, wobei der zumindest eine Elektromotor (16) über ein zweites Mehrganggetriebe (19) mit dem zumindest einen korrespondierenden Rad (6) einer anderen Achse (5) gekoppelt ist, und wobei die Mehrganggetriebe (14,19) als Mehrstufenschaltgetriebe (14,19) ausgebildet sind, **dadurch gekennzeichnet, dass** bei stehendem Verbrennungsmotor (7) vor einem Schaltvorgang des zweiten Mehrganggetriebes (19) der Verbrennungsmotor (7) gestartet wird und/oder bei laufendem Verbrennungsmotor (7) ein Ausschalten des Verbrennungsmotors (7) bis zur Durchführung eines Schaltvorgangs des zweiten Mehrganggetriebes (19) verzögert wird.

2. Hybridantriebssystem (2) nach einem der vorangehenden Ansprüche, **dadurch gekennzeichnet, dass** eine Steuerschaltung (20) vorgesehen ist, welche die Schaltstellung zumindest eines der Mehrganggetriebe (14, 19) und/oder die Ansteuerung des wenigstens einen Verbrennungsmotors (7) und/oder die Ansteuerung des wenigstens einen Elektromotors (16) beeinflusst.

3. Hybridantriebssystem (2) nach einem der vorangehenden Ansprüche, **gekennzeichnet durch** Messsensoren (29), welche insbesondere die Schaltstellung zumindest eines der Mehrganggetriebe (14, 19) und/oder den Betriebszustand des wenigstens einen Verbrennungsmotors (7) und/oder den Betriebszustand des wenigstens einen Elektromotors (16) und/oder den Betriebszustand des Kraftfahrzeugs (1) und/oder die Stellung von Bedienelementen des Kraftfahrzeugs (1) misst.

4. Hybridantriebssystem (2) nach einem der vorangehenden Ansprüche, **dadurch gekennzeichnet, dass** in der Steuerschaltung (20) zumindest eine Kennlinie, vorzugsweise zumindest ein Kennlinienfeld (22) mit mehreren Kennlinien (25, 26, 27, 28, 30, 31) gespeichert ist.

5. Hybridantriebssystem (2) nach einem der vorangehenden Ansprüche, **dadurch gekennzeichnet, dass** beim Erreichen von Grenzbeanspruchungsbedingungen ein Gangwechsel eines Mehrganggetriebes, insbesondere eines zweiten Mehrganggetriebes (19) erfolgt (25), um Überbelastungen von Teilen des Hybridantriebssystems (2) zu vermeiden.

6. Hybridantriebssystem (2) nach einem der vorangehenden Ansprüche, **dadurch gekennzeichnet, dass** ein Gangwechsel des zweiten Mehrganggetriebes (19) bevorzugt bei einem Gangwechsel des ersten Mehrganggetriebes (14) erfolgt (27).

7. Hybridantriebssystem (2) nach einem der vorangehenden Ansprüche, **dadurch gekennzeichnet, dass** bei einem Gangwechsel des zweiten Mehrganggetriebes (19) der Zugkraftverlust zumindest teilweise, bevorzugt. im Wesentlichen von dem wenigstens einen Verbrennungsmotor (7) ausgeglichen wird.

8. Hybridantriebssystem (2) nach einem der vorangehenden Ansprüche, **dadurch gekennzeichnet, dass** ein Gangwechsel des zweiten Mehrganggetriebes (19) in einem Drehmomentbereich des Elektromotors (16) erfolgt, in dem der Zugkraftverlust weitgehend, bevorzugt im Wesentlichen vollständig von dem wenigstens einen Verbrennungsmotor (7) ausgeglichen werden kann.

9. Hybridantriebssystem (2) nach einem der vorangehenden Ansprüche, **dadurch gekennzeichnet, dass** bei wenigstens einem laufenden Verbrennungsmotor (7) ein Gangwechsel des zweiten Mehrganggetriebes (19) bei möglichst niedrigen Drehmomenten des Elektromotors (16) erfolgt, wobei als Untergrenze bevorzugt der Wirkungsgrad eines Elektromotors (16) und/oder die Leistungshyperbel zumindest eines Elektromotors (16) dient.

10. Hybridantriebssystem (2) nach einem der vorangehenden Ansprüche, **dadurch gekennzeichnet, dass** ein Herunterschalten des zweiten Mehrganggetriebes (19) bei einer Verzögerung des Kraftfahrzeugs (1) und/oder bei einem Rekuperationsbetrieb verzögert und/oder vermieden wird (30, 31), insbesondere in einem hohen Drehmomentbereich des Elektromotors (16).

11. Kraftfahrzeug, **gekennzeichnet durch** ein Hybridantriebssystem nach einem der Ansprüche 1 bis 10.

## Claims

1. Hybrid drive system (2) for a motor vehicle (1), having at least one internal combustion engine (7) and at least one electric motor (16), which in each case drive at least one wheel (6) of the motor vehicle (1), the at least one internal combustion engine (7) being coupled via a first multi-speed gear (14) to the at least one corresponding wheel (6) of one axle (4), the at least one electric motor (16) being coupled via a second multi-speed gear (19) to the at least one corresponding wheel (6) of another axle (5), and the motor-speed gears (14, 19) being designed as multi-step shift gears (14, 19), **characterized in that**, when the internal combustion engine (7) is stationary, the internal combustion engine (7) is started before a shift operation of the second multi-speed gear (19), and/or, when the internal combustion engine (7) is running, a switch-off of the internal combustion engine (7) is delayed until a shift operation of the second multi-speed gear (19) is carried out.

2. Hybrid drive system (2) according to the preceding claim, **characterized in that** a control circuit (20) is provided, which influences the shift position of at least one of the multi-speed gears (14, 19) and/or the activation of at least one internal combustion engine (7) and/or the activation of the at least one electric motor (16).

3. Hybrid drive system (2) according to one of the preceding claims, **characterized by** measuring sensors (29) which, in particular, measure the shift position of at least one of the multi-speed gears (14, 19) and/or the operating state of the at least one internal combustion engine (7) and/or the operating state of the at least one electric motor (16) and/or the operating state of the motor vehicle (1) and/or the position of operating elements of the motor vehicle (1).

4. Hybrid drive system (2) according to one of the preceding claims, **characterized in that** at least one characteristic curve, preferably at least one characteristic diagram (22) having a plurality of characteristic curves (25, 26, 27, 28, 30, 31), is stored in the control circuit (20).

5. Hybrid drive system (2) according to one of the preceding claims, **characterized in that**, when limit stress conditions are reached, a speed change of a multi-speed gear, in particular of a second multi-speed gear (19), takes place (25), in order to avoid overloads of parts of the hybrid drive system (2).

6. Hybrid drive system (2) according to one of the preceding claims, **characterized in that** a speed change of the second multi-speed gear (19) takes place (27) preferably in the event of a speed change of the first multi-speed gear (14).

7. Hybrid drive system (2) according to one of the preceding claims, **characterized in that**, in the event of a speed change of the second multi-speed gear (19), the loss of traction is compensated at least partially, preferably essentially, by the at least one internal combustion engine (7),

8. Hybrid drive system (2) according to one of the preceding claims, **characterized in that** a speed change of the second multi-speed gear (19) takes place in a torque range of the electric motor (16) in which the loss of traction can be compensated largely, preferably essentially completely, by the at least one internal combustion engine (7).

9. Hybrid drive system (2) according to one of the preceding claims, **characterized in that**, when at least one internal combustion engine (7) is running, a speed change of the second multi-speed gear (19) takes place at as low torques of the electric motor (16) as possible, preferably the efficiency of an electric motor (16) and/or the power hyperbola of at least one electric motor (16) serving as the lower limit.

10. Hybrid drive system (2) according to one of the preceding claims, **characterized in that** a downsthift of the second multi-speed gear (19) is delayed and/or avoided (30, 31) in the event of a deceleration of the motor vehicle (1) and/or in a recovery mode, in particular in a high torque range of the electric motor (16).

11. Motor vehicle, **characterized by** a hybrid drive system according to one of Claims 1 to 10.

## Revendications

1. Système d'entraînement hybride (2) pour un véhicule automobile (1), présentant au moins un moteur à combustion interne (7) et au moins un moteur électrique (16), lesquels entraînent à chaque fois au moins une roue (6) du véhicule automobile (1), l'au moins un moteur à combustion interne (7) étant accouplé par le biais d'une première transmission à plusieurs vitesses (14) à l'au moins une roue correspondante (6) d'un essieu (4), l'au moins un moteur électrique (16) étant accouplé par le biais d'une deuxième transmission à plusieurs vitesses (19) à l'au moins une roue correspondante (6) d'un autre essieu (5), et les transmissions à plusieurs vitesses (14, 19) étant réalisées sous forme de transmissions à changement de vitesses à plusieurs rapports (14, 19), **caractérisé en ce que** lorsque le moteur à combustion interne (7) est au repos avant une opération de changement de vitesses de la deuxième transmission à plusieurs vitesses (19), le moteur à combustion interne (7) est démarré et/ou lorsque le moteur à combustion interne (7) tourne, une déconnexion du moteur à combustion interne (7) est retardée jusqu'à la mise en oeuvre d'une opération de changement de vitesses de la deuxième transmission à plusieurs vitesses (19).

2. Système d'entraînement hybride (2) selon la revendication précédente, **caractérisé en ce qu'**il est prévu un circuit de commande (20) qui influence la position de changement de vitesses d'au moins l'une des transmissions à plusieurs vitesses (14, 19) et/ou la commande de l'au moins un moteur à combustion interne (7) et/ou la commande de l'au moins un moteur électrique (16).

3. Système d'entraînement hybride (2) selon l'une quelconque des revendications précédentes, **caractérisé par** des capteurs de mesure (29), qui mesurent en particulier la position de changement de vitesses d'au moins l'une des transmissions à plusieurs vitesses (14, 19) et/ou l'état de fonctionnement de l'au moins un moteur à combustion interne (7) et/ou l'état de fonctionnement de l'au moins un moteur électrique (16) et/ou l'état de fonctionnement du véhicule automobile (1) et/ou la position d'éléments de commande du véhicule automobile (1).

4. Système d'entraînement hybride (2) selon l'une quelconque des revendications précédentes, **caractérisé en ce que** dans le circuit de commande (20) est mémorisée au moins une courbe caractéristique, de préférence au moins un champ de courbes caractéristiques (22) comprenant plusieurs courbes caractéristiques (25, 26, 27, 28, 30, 31).

5. Système d'entraînement hybride (2) selon l'une quelconque des revendications précédentes, **caractérisé en ce que** lorsque des conditions de charge limites sont atteintes, un changement de vitesses d'une transmission à plusieurs vitesses, en particulier d'une deuxième transmission à plusieurs vitesses (19) a lieu (25), afin d'éviter des surcharges de pièces du système d'entraînement hybride (2).

6. Système d'entraînement hybride (2) selon l'une quelconque des revendications précédentes, **caractérisé en ce qu'**un changement de vitesses de la deuxième transmission à plusieurs vitesses (19) a lieu (27) de préférence lors d'un changement de vitesses de la première transmission à plusieurs vitesses (14).

7. Système d'entraînement hybride (2) selon l'une quelconque des revendications précédentes, **caractérisé en ce que** dans le cas d'un changement de vitesses de la deuxième transmission à plusieurs vitesses (19), la perte de force de traction est compensée au moins en partie, de préférence essentiellement par l'au moins un moteur à combustion interne (7).

8. Système d'entraînement hybride (2) selon l'une quelconque des revendications précédentes, **caractérisé en ce qu'**un changement de vitesses de la deuxième transmission à plusieurs vitesses (19) a lieu dans une plage de couple du moteur électrique (16) dans laquelle la perte de force de traction peut être compensée largement, de préférence sensiblement complètement par l'au moins un moteur à combustion interne (7).

9. Système d'entraînement hybride (2) selon l'une quelconque des revendications précédentes, **caractérisé en ce que** lorsqu'au moins un moteur à combustion interne (7) tourne, un changement de vitesses de la deuxième transmission à plusieurs vitesses (19) a lieu pour des couples du moteur électrique (16) aussi faibles que possible, le rendement d'un moteur électrique (16) et/ou l'hyperbole de puissance d'au moins un moteur électrique (16) servant de préférence de limite inférieure.

10. Système d'entraînement hybride (2) selon l'une quelconque des revendications précédentes, **caractérisé en ce qu'**un rétrogradage de la deuxième transmission à plusieurs vitesses (19) lors d'un ralentissement du véhicule automobile (1) et/ou lors d'un mode de fonctionnement à récupération est ralenti et/ou évité (30, 31), en particulier dans une plage de couple élevée du moteur électrique (16).

11. Véhicule automobile, **caractérisé par** un système d'entraînement hybride selon l'une quelconque des revendications 1 à 10.
